# EUROPEAN PATENT APPLICATION

(11) **EP 3 572 585 A1**
(43) Date of publication of application: **27.11.2019**
(21) Application number: 19187037.7
(22) Date of filing: 28.12.2012
(51) Int. Cl.: E01C 23/00, G01M 17/02

(54) **METHOD AND APPARATUS FOR REDUCING SHOULDER WEAR ON TESTING WHEEL**

(30) Priority: 29.12.2011 WO PCT/US2011/067994
(62) Divisional of application: 12863803.8
(71) Applicant: COMPAGNIE GENERALE DES ETABLISSEMENTS MICHELIN, 63000 Clermont-Ferrand (FR)
(72) Inventor: MOUSSEAU, Cedric, W., Simpsonville, SC South Carolina 29681 (US); ADAMS, Brooks, M., Easley, SC South Carolina 29640-7756 (US); AYGLON, Virgile, 63000 Clermont-Ferrand (FR); HART, Samuel, E., Jr., Travelers Rest, SC South Carolina 29690 (US); HUTCHINSON-DE STAERCKE, Ann, Greenville, SC South Carolina 29615 (US); RHYNE, Timothy, Brett, Greenville, SC South Carolina 29609 (US)
(74) Representative: Casalonga

(57) **Abstract**

The present invention includes methods and apparatus for testing tire performance using a laterally-contoured road wheel. Accordingly, particular embodiments of the machine include a wheel configured to rotate, the wheel having a tire operating surface configured to engage a tire during operation, the outer tire operating surface arranged along an annular side of the wheel and having a width extending laterally relative a circumferential direction of the wheel along a contoured path. The machine may further include a drive source configured to rotate the wheel and a tire mount configured to rotatably maintain a tire. The present invention also includes methods of forming a laterally-contoured tire operating surface for a road wheel.

## Description

This application claims priority to, and the benefit of, International Patent Application No. PCT/US2011/067994, filed December 29, 2011 with the United States Receiving Office, which is hereby incorporated by reference.

### BACKGROUND OF THE INVENTION

This invention relates generally to road wheels for testing tires on tire testing machines and more specifically, to tire operating surfaces employed by road wheels in testing or evaluating tire performance.

### DESCRIPTION OF THE RELATED ART

Tires are often tested to determine any of a variety of characteristics. In particular instances, in lieu of testing tires on a vehicle, where conditions are difficult to control, tires are tested on a rotating road wheel to better control the test conditions. Such road wheels include an outer tire operating surface along which the tire contacts and operates. Such outer tire operating surface forms a radially outer surface of the wheel. It can also be said the outer tire operating surface is an annular surface.

In operation, the tire is forcefully applied against, and rotates along, the outer tire operating surface of the rotating road wheel. Although the outer tire operating surface exhibits a curvature in a longitudinal direction as the surface extends about a circumference of the wheel, the outer tire operating surface is laterally flat, whereby the surface extends laterally along a path perpendicular to the circumferential direction of the wheel and parallel to the rotational axis of the wheel. In other words, the outer tire operating surface of the wheel forms a right circular cylindrical surface extending laterally a constant distance from relative the rotational axis of the wheel.

When a tire contacts a tire operating surface, whether it is a wheel surface or a ground surface, a portion of the tire tread contacts the operating surface. The portion of the tread contacting the operating surface forms an area of contact, which is referred to as a contact patch or footprint of the tire. A tire footprint includes an outer perimeter defining the area of contact, which may form a particular shape.

One goal of tire testing machines is to closely replicate real-world operating conditions for tires, such as conditions where the tire operates along a generally flat surface, such as a ground surface. Unfortunately, these cylindrical outer tire operating surfaces do not represent real-world conditions since it has been observed that tires tested on these cylindrical surfaces commonly exhibit notably higher wear on the shoulders of the tire treads than those tires tested on a generally flat surface. In other words, the wear distribution across a width of the tire tread is not representative of the wear distribution attained when the tire operates on a generally flat surface. It has also been observed that a footprint of a tire tested on a cylindrical outer wheel surface is different than the tire footprint achieved when operating along a generally flat surface. A tire footprint is the area of contact between a tire and a surface upon which the tire rests.

Therefore, there is a need to provide a road wheel having an outer tire operating surface better representing real-world conditions, and in particular, a wheel generating a wear distribution along a tire tread more consistent with tires operating along a generally flat operating surface. There is also a need to generate a tire footprint more consistent with tires operating along a generally flat operating surface.

### SUMMARY OF THE INVENTION

The present invention includes methods and apparatus for testing tire performance using a wheel, the wheel having a laterally-contoured tire operating surface. The present invention also includes methods of forming a laterally-contoured tire operating surface for a road wheel. In particular embodiments, such methods comprise a step of providing a wheel configured to rotate, the wheel having an tire operating surface configured to engage a tire during operation, the tire operating surface being arranged outwardly from a rotational axis of the wheel in a radial direction of the wheel and having a width extending laterally relative a circumferential direction of the wheel, where the width of the operating surface extends laterally along a contoured path. Further steps of such methods include engaging forcefully a tread of a tire against the tire operating surface of the wheel and rotating the tire and the wheel while engaged according to the prior step for a sufficient duration to evaluate the tire.

In particular embodiments of the invention, a machine for testing tire performance, the machine includes a wheel configured to rotate, the wheel having an tire operating surface configured to engage a tire during operation, the tire operating surface being arranged outwardly from a rotational axis of the wheel in a radial direction of the wheel and having a width extending laterally relative a circumferential direction of the wheel, where the width of the operating surface extends laterally along a contoured path. Such embodiments include a drive source configured to rotate the wheel and a tire mount configured to rotatably maintain a tire and forcefully maintain the tire against the wheel.

The foregoing and other objects, features and advantages of the invention will be apparent from the following more detailed descriptions of particular embodiments of the invention, as illustrated in the accompanying drawings wherein like reference numbers represent like parts of the invention.

### BRIEF DESCRIPTION OF THE DRAWINGS

FIG. **1** is a side view of a tire testing device comprising a machine including a road wheel upon which a tire operates to evaluate the performance of the tire, the road wheel having a laterally-contoured outer tire operating surface forming a convex outer surface extending annularly around the road wheel in accordance with a particular embodiment of the invention.
FIG. **2** is a sectional view taken along line **2-2** in FIG. **1****,** showing the convex tire operating surface of the wheel engaging a tire.
FIG. **3** is a section view of a prior art road wheel engaging a tire, the outer tire operating surface of the road wheel comprising a right circular cylindrical surface.
FIG. **4** is a chart showing the leading edge of a tire footprint taken along different tire operating surfaces.
FIG. **5** is a sectional view of an alternative embodiment of the road wheel shown in FIG. **2****,** the alternative wheel comprising a laterally contoured tire operating surface having a variable lateral curvature.
FIG. **6** is a sectional view of an alternative embodiment of the road wheel shown in FIG. **2****,** the alternative wheel comprising a laterally contoured tire operating surface having a variable lateral curvature.
FIG. **7** is a sectional view of an alternative embodiment of the road wheel shown in FIG. **2****,** the alternative wheel comprising a laterally contoured tire operating surface having a variable lateral curvature.
FIG. **8** is a sectional view of an alternative embodiment of the road wheel shown in FIG. **2****,** the alternative wheel comprising a laterally contoured tire operating surface arranged along an annular inner side of the wheel.
FIG. **9** is a top perspective view of a base member coated with adhesive being rotated along a single layer of aggregate arranged along a retention surface, the bonding surface of the base member and the adhesive layer being both laterally convex and longitudinally convex and the single layer of aggregate and the retention surface being laterally concave according to a method of forming a tire operating surface for a road wheel, in accordance with a particular embodiment of the invention.
FIG. **10A** is an end elevational view showing the adhesive coated base member being applied to a single layer of aggregate arranged along a retention surface in accordance with a particular embodiment of the invention.
FIG. **10B** is an end elevational view showing the adhesive coated base member of FIG. **10A** applied to the aggregate application fixture in accordance with a particular embodiment of the invention.
FIG. **10C** is a side elevational view of the adhesive coated base member applied to the aggregate application fixture showing the base member being rotated along a length of the fixture in accordance with particular embodiments of the invention.
FIG. **10D** is a perspective view of a road wheel for use in tire testing, the road wheel having an external annular side including an annular tire operating surface comprising a plurality of arcuate tire operating surface segments coated with aggregate in accordance with a particular embodiment of the invention.

### DETAILED DESCRIPTION OF PARTICULAR EMBODIMENTS

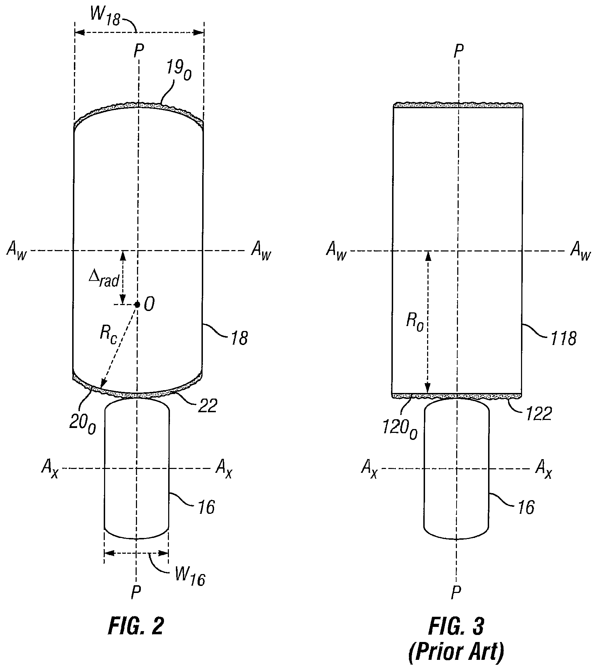

As suggested above, there is a need to provide an improved road wheel for performing tire testing operations. With reference to FIG. **3****,** tire road or testing wheels **118** employed in the prior art have an outer tire operating surface **120ₒ** comprising right circular cylindrical surfaces, whereby the outer tire operating surface is laterally flat. In other words, the flat outer tire operating surface **120ₒ** generally extends laterally across the surface width by being located a constant distance **Rₒ** from a rotational axis **A_{w}-A_{w}** of the wheel such that the lateral extension of the outer surface **120ₒ** is parallel to the rotational axis **A_{w}-A_{w}** (i.e., not inclined relative to the rotational axis). The outer tire operating surface may include texture **122,** which may form a layer of particulate or other desirous material. However, when tires are tested on these right circular cylindrical operating surfaces, the tire treads experience higher wear rates on the tread shoulders when compared to tires tested on a generally flat surface. Furthermore, the shape of a tire footprint generated along a right circular cylindrical surface is notably different than the shape of a tire footprint generated along a generally flat surface. Therefore, there is a need to provide a road wheel having a tire operating surface that better generates tread wear distributions across a tire footprint and a tire footprint more closely representing those obtained along generally flat tire operating surfaces.

Accordingly, particular embodiments of the present invention comprise methods of testing tire performance using a wheel having a laterally-contoured tire operating surface arranged along an annular side of the wheel. In testing tire performance, for example, tire durability may be tested and evaluated. It is understood that the testing of durability may evaluate the longevity of a tire tread by ascertaining the rate of wear, but may also (additionally or alternatively) test the longevity of other elements of the tires constituent components. In any event, it may be desirous, when testing a tire along a tire operating surface arranged along an annular side of the wheel, to better ensure that the tire wears as similar to a tire operating on a generally flat surface, such as a ground surface or a flat machine testing surface. Likewise, it may be desirous, when testing a tire on such a tire operating surface of the wheel, to better ensure that the tire has a footprint commensurate with the footprint of a tire operating on a generally flat surface. Accordingly, an annular road wheel is provided having a width extending laterally along a contoured path to form a laterally-contoured tire operating surface arranged along an annular side of the wheel. Accordingly, the tire operating surface may be arranged along an outer or inner annular side of the wheel, each of which are arranged in a radial direction outwardly from the rotational axis of the wheel. In certain embodiments, at least a portion of the laterally-contoured surface is convex, such as to form a road wheel having a laterally-convex, outer tire operating surface. In yet other embodiments, the laterally-contoured surface is at least partially concave. In particular embodiments, the wheel having laterally-contoured tire operating surface forms a portion of a tire testing machine. The following will now discuss various methods of testing tire performance using a wheel.

Particular embodiments of such methods include a step of providing a wheel configured to rotate, the wheel having a tire operating surface arranged along an annular side of the wheel and configured to engage a tire during operation, the tire operating surface having a width extending laterally relative a circumferential direction of the wheel along a contoured path. In such embodiments, the wheel has a laterally-contoured tire operating surface configured to engage a tire during operation. The tire operating surface is arranged along an annular side of the wheel and in a outwardly in radial direction from the rotational axis of the wheel. The annular side may comprise an inner or outer side of the wheel. Because the tire operating surface is arranged along an annular side of the wheel, when describing the shape of either the tire operating surface or the tire operating side of the wheel, the description of one herein also describes the other unless specifically noted otherwise, and vice versa.

It is understood that the tire operating surface may extend continuously around an annular side of the wheel to form an annular tire operating surface. In such instances, it can be said that the tire operating surface extends circumferentially about a rotational axis of the wheel. It is also understood that the tire operating surface may extend discontinuously or intermittently around an annular side of the wheel. In any event, the tire operating surface is a laterally-contoured surface, extending laterally across a width of the surface transverse to the radial direction of the wheel along a contoured path. The contoured path may comprise any non-linear path, such as a contoured path, which may extend fully or partially across the width of the wheel. Accordingly, the laterally-contoured surface at least comprises a non-linear segment or portion, which may be coupled with one or more linear segments or portions.

In particular embodiments, the laterally-contoured tire operating surface tapers radially inward toward the rotational axis of the wheel as the surface extends laterally outward relative a centerline of the tire operating surface, the centerline extending circumferentially around the tire operating surface. In certain instances of such embodiments, when the tire operating surface is arranged along an outer annular side of the wheel, the portion of the tire operating surface tapering radially inward forms a convex tire operating surface. Accordingly, it can be said that the laterally-contoured tire operating surface extends laterally along a convex path to form a laterally-convex outer surface. In other instances of such embodiments, when the tire operating surface is arranged along an inner annular side of the wheel, the portion of the tire operating surface tapering radially inward forms a concave tire operating surface. It is understood, however, that laterally-contoured inner and outer operating surfaces may each include concave and/or convex portions. Moreover, as otherwise noted herein, it is appreciated that the full width, or only a portion, of a laterally-contoured surface may be contoured. Accordingly, it can be said that at least a portion of the width of the laterally-convex surface extends along a convex or concave path. It is understood that a convex tire operating surface is curved or rounded outwardly relative the rotational axis of the wheel, whereby the lateral extents of the surface width are located closer to the rotational axis of the wheel than more intermediate portions of the surface width. For a concave tire operating surface, the opposite is true. The convex, outer tire operating surface provides a tread wear distribution across a tire footprint more similar to the distribution attained when the tire operates on generally flat surface. The convex, outer tire operating surface also provides a tire footprint that more closely resembles the tire footprint arising along a generally flat surface. The same benefits appreciated for a convex, outer tire operating surface are also appreciated for a concave, inner tire operating surface.

It is understood that the laterally-contoured tire operating surface may be symmetrical or asymmetrical relative a plane bisecting a width of the wheel and extending radially outward and normal to the rotational axis of the wheel (referred to herein as the "bisecting plane"). By further example, the widthwise extension of the surface may extend along any non-linear path, including a constant radius path or a path comprising multiple curved and/or linear segments defined by two or more different radii, which may result in a curvilinear or non-linear path. In particular instances, the convexity or concavity of tire operating surface has a constant curvature defined by a constant radius of curvature. The origin of the radius of curvature may be located at any radial or lateral location relative the rotational axis and the bisecting plane, respectively. For example, the origin of the radius of curvature may be located on the axis of rotation, on the bisecting plane, or may be spaced a desired distance from the axis of rotation and/or the bisecting plane. In more specific examples, the origin is located at the intersection of the bisecting plane and the axis of rotation. The resulting radius of curvature creates a spherical surface, although the surface does not extend 360 degrees around the origin. It is possible to create more or less curvature by moving the origin closer to, or farther from, the axis of rotation. It is also possible to provide asymmetry by moving the origin in a lateral direction away from the bisecting plane.

In performing tire performance testing, at least a portion of the laterally-contoured tire operating surface may be texturized to include a texture. The texture may be provided to facilitate tire traction and/or to facilitate tread wear. It is understood that such texture may comprise any known or desired texture formed to or applied by any desired process. For example, the texture may be formed into the tire operating surface, such as by any manual or mechanized process, such as molding, mechanical or chemical etching, cold or hot working, or any grinding or abrasion process. Any such or otherwise desired texture may be applied or attached to the tire operating surface, such as by way of applying a layer of desired material to the laterally-contoured surface. Exemplary texture includes texturized tape (such as safety walk tape), particulate, or stone, but may include any other material providing a desired texture upon which it is desired for a tire to operate whether natural or unnatural. It is appreciated that the tire operating surface may have a smooth texture. It is noted that while the presence of texture may provide a non-linear micro surface, the presence of such texture does not negate or alter the more generally formation of a laterally-contoured tire operating surface or side, and the laterally-contoured path along which the tire operating surface or side extends.

It is understood that the wheel may be formed in any manner and of any construction. For example, the lateral-contour of a tire operating surface may be formed by molding or machining the convexity into the wheel's tire operating surface. By further example, such as when the tire operating surface is obtained by affixing one or more plates around the outer or inner circumference of the wheel, the lateral-contour may be achieved by molding, bending, or shaping each plate through any hot or cold forming process.

Further steps in performing the method of testing tire durability using a wheel include (1) engaging forcefully the tread of the tire with the tire operating surface of the wheel and (2) rotating the tire and the wheel while engaged according to the prior step for a desired duration to evaluate the durability of the tire. Each of these steps may be performed in accordance with known principles and techniques.

With regard to the step of engaging forcefully the tread of the tire with the tire operating surface, tire and/or wheel may be translated toward the other to forcefully engage the tire and the wheel. Because the tire and wheel maybe mounted on the same machine, portions of the machine corresponding to the tire or wheel may translate to achieve such engagement. Of course, the tire and wheel may be mounted on separate machines or apparatus while still achieving the desired engagement. It is also understood that any orientation of the tire relative the wheel may be employed to provide any desired test condition. For example, by altering the positional relationship between the rotational axes of the tire and wheel, a slip angle may be provided between the tire and wheel or camber introduced to the tire.

With regard to the step of rotating the tire and wheel, it is understood that the tire and/or wheel may be driven to accomplish the step of rotating. In doing so, a drive source is arranged in operable communication with tire and/or the wheel. The drive source may comprise any drive source known to one of ordinary skill in the art, and may comprise, for example, a motor.

These methods for testing tire durability on a laterally-contoured tire operating surface may be achieved manually or automatically, in whole or in part. Exemplary embodiments of a tire testing device for use in performing such methods are discussed in further detail below. The device(s) shown in the figures only exemplify any of a variety of tire testing devices that may be employed within the scope of this invention.

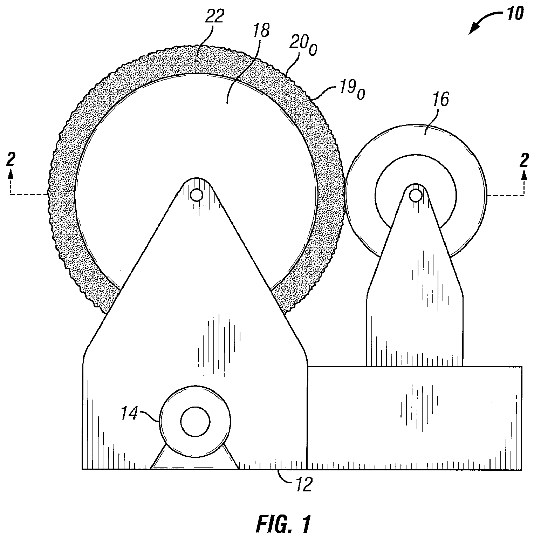

With reference to FIG. **1****,** an exemplary tire testing device **10** comprising a tire testing machine is shown. The machine **10** includes a base or housing **12** to which a tire **16** and a wheel **18** are rotatably attached (that is, configured to rotate). The tire testing device and housing includes a tire mount configured to rotatably maintain a tire and forcefully maintain the tire against the wheel. A drive source **14** is also included for driving the wheel and/or the tire, which may comprise any drive source known to one of ordinary skill in the art, such as a motor.

The wheel **18** includes a laterally-contoured outer side **19ₒ** generally forming a laterally-contoured outer tire operating surface **20ₒ**. Both the outer side **19ₒ** and the outer surface **20ₒ** extend lengthwise in a circumferential direction about the wheel to form an annular side and surface, respectively. Outer side **19ₒ** and outer surface **20ₒ** are shown to have a width **W₁₈**, which can be any size, including a size equal to or greater than the width **W₁₆** of the tire **16.** In the embodiment shown in FIG. 1, the outer surface **20ₒ** extends laterally in a rounded or curved path to form a laterally-convex surface. This is more clearly shown in FIG. **2****,** which shows a section of the wheel and tire of FIG. **1** taken along line **2-2.**

While it is understood that the laterally-convex surface may extend laterally along any curved path, which may comprise any curvilinear or non-linear path, the lateral path shown in FIG. **2** extends along a constant curvature defined by a radius of curvature **R_{c}.** In particular, radius **R_{c}** is shown extending from origin **O.** Although the origin **O** may be arranged at any desired location, in the embodiment shown, the origin is arranged along a bisecting plane represented by line **P-P.** This bisecting plane **P-P** bisects the width **W₁₈** of the outer tire operating surface **20ₒ**, and extends perpendicular to the wheel's rotational axis **A_{w}-A_{w}**. It can be said that bisecting line **P-P** defines a lateral centerline of the wheel and/or of the outer tire operating surface.

It is appreciated that origin **O** may be arranged any distance **Δ_{rad}** from the rotational axis **A_{w}-A_{w}** to achieve any desired radius of curvature **R_{c}.** Accordingly, the curvature may be increased or decreased by altering the distance **Δ_{rad}** between the origin **O** and the rotational axis **A_{w}-A_{w}**. For example, in FIG. **2****,** the origin **O** is shown arranged between the rotational axis **A_{w}-A_{w}** and the outer surface **20ₒ** arranged at the opposing end of the radius of curvature **R_{c}.** It is noted that the distance **Δ_{rad}** may be further increase the radius of curvature by positioning the origin beyond the rotational axis **A_{w}-A_{w}**, whereby the rotational axis **A_{w}-A_{w}** is located between the origin **O** and the outer tire operating surface **20ₒ** into which the radius of curvature **R_{c}** terminates. It is also appreciated that a spherical outer surface may be provided. For example, when **Δ_{rad}** equals zero, the origin **O** is arranged at the intersection of the rotational axis **A_{w}-A_{w}** to form a spherical outer surface **20ₒ**, that is a surface where the longitudinal and lateral extension of the outer surface extends the same distance from the origin. The outer surface may also be symmetrical relative bisecting plate **P-P** by arranging the origin **O** at the intersection of the rotational axis **A_{w}-A_{w}** and the bisecting plate **P-P.**

With continued reference to FIG. **2****,** the wheel's outer tire operating surface **20ₒ** is shown to be symmetrical relative to bisecting plane **P-P** or a circumferential centerline of the outer surface width **W₁₈**. Still, it is understood that outer surface **20ₒ** may be asymmetrical. When the lateral extension of outer surface is defined by a constant radius **R_{c}**, such as is shown in FIG. **2****,** asymmetry may be achieved by altering the distance between the origin **O** and the bisecting plane **P-P.** Alternatively or additionally, asymmetry may be achieved by defining the lateral extension or path of outer surface **20ₒ** with two or more linear, curvilinear, or non-linear segments.

As noted otherwise herein, the outer tire operating surface may include texture. With reference FIGS. **1** and **2****,** by example, the outer tire operating surface **20ₒ** of wheel **18** includes texture **22.** This texture **22** is shown as a layer, but may comprise any desired texture formed or applied to the outer surface **20ₒ** desired as more specifically discussed above.

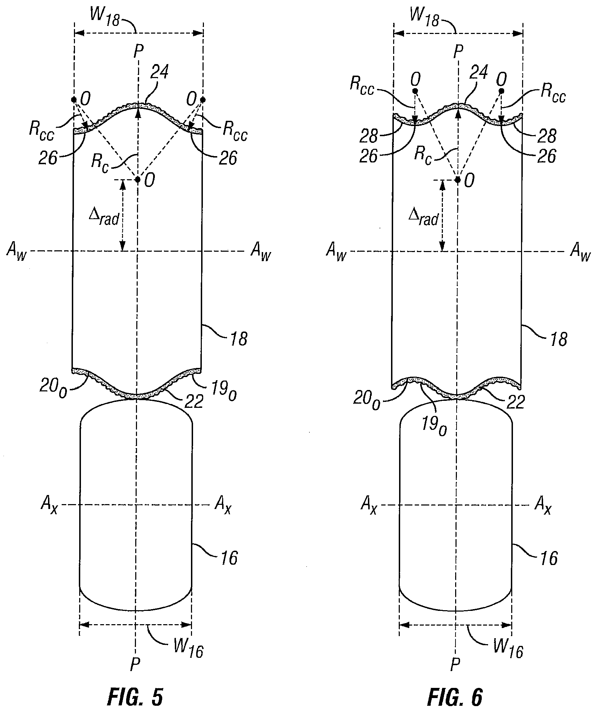

As noted otherwise herein, the outer tire operating surface and/or side may extend in a widthwise direction of wheel along any desired non-linear path, including any variable or multi-curvature laterally-contoured path. Exemplary embodiments thereof are shown in FIGS. **5-7****,** where the contoured path is defined by two or more different radii of curvatures. In each figure, the tire is shown generally engaged with the wheel; however, it is understood that the tire is often applied under load and therefore will deflect and therefore engage and operate concurrently along a greater width of the wheel's outer surface. With reference to FIG. **5****,** the laterally-contoured outer tire operating surface extends along a non-linear path including or defining a central, convex portion **24** (convex relative the outer side **19ₒ** of the wheel) arranged in an axial direction of the wheel between a pair of counter-curvature portions **26** having a radius of curvature **R_{cc}**. By providing counter-curvature portions **26,** in effect, the outer tire operating surface becomes flatter or less curved as the outer tire operating surface extends laterally away from the centerline of the wheel. By doing so, the shape of a tire footprint may be better controlled as the tire rolls along the tire operating surface and the counter-curvature portion. It is noted that each of the counter-curvature portions **26** are arranged adjacent the central, convex portion **24** to provide a smooth transition between the adjacent portions. It is understood that the pair of counter-curvature portions **26** may have the same or different radii of curvature. It is further noted in the embodiment shown that the pair of counter-curvature portions define a concave outer surface of the wheel.

In lieu of, or in addition to, employing a counter-curvature portion, a linearly-extending portion may extend from the central, convex portion as the outer tire operating surface extends toward a lateral side of the surface width. In such instances, the provide a smooth transition between the central portion and the linearly-extending portion, the linearly-extending portion extends laterally an angle greater than zero relative the rotational axis of the wheel. In any event, by providing counter-curvature or a linear taper, any further increase in the slope of the surface taper or curvature is eliminated as the tire operating surface approaches any lateral side of the wheel (or, in other words, as the tire operating surface extends away from the centerline of the wheel).

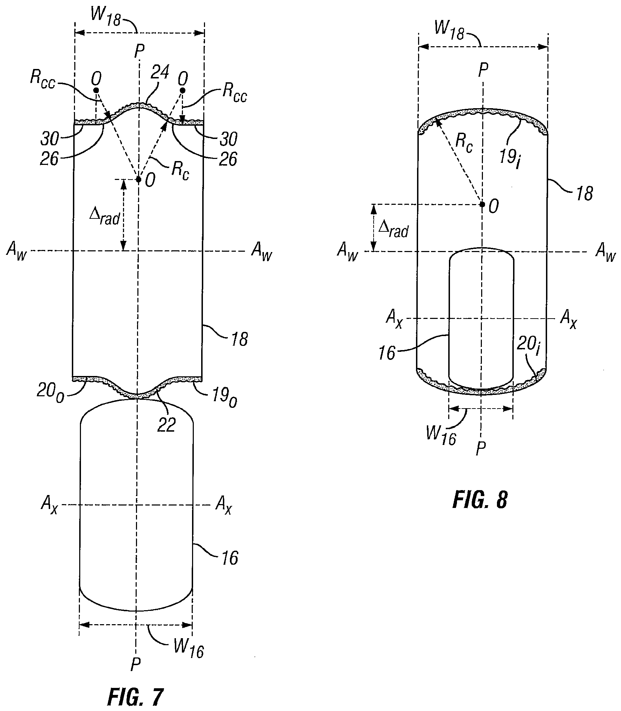

By further example, with reference now to the embodiment of FIG. **6****,** each counter-curvature portion **26** extends further laterally, relative to the embodiment of FIG. 5, to form an upturn or raised area **28** at the lateral sides of the wheel. It can be said that while the central, convex portion **24** defines an area of decreasing outer diameter of the outer tire operating surface **20ₒ** (relative the rotational axis **A_{w}-A_{w}** of the wheel **18** as the outer tire operating surface extends laterally along the width of the surface **W₁₈**), the upturn or raised area **28** defines an area of increasing outer diameter for the outer tire operating surface. With reference now to the embodiment of FIG. 7, in lieu of the counter-curvature **26** extending further laterally to form an upturn **28,** a linearly-extending portion **30** is provided extending generally parallel with the rotational axis **A_{w}-A_{w}** of the wheel **18.** The linearly-extending portions **30** define cylindrical portions, which may form right-cylindrical surfaces as generally shown or any other tapered cylindrical surface as desired. Accordingly, the embodiment of FIG. **7** provides an outer tire operating surface **20ₒ** extending laterally along a contoured path having a central, convex portion **24** arranged between a pair of cylindrical portions **30.**

As discussed otherwise herein, the tire operating surface may be formed along an inner annular side of the wheel. By example, with reference to FIG. **8****,** a wheel **18** is shown having a tire operating surface **20ᵢ** arranged along an inner, annular side **19ᵢ** of the wheel **18.** A tire **16** is also shown operating along the inner, annular side **19ᵢ**. In the embodiment shown, both the inner side **19ᵢ** and the inner surface **20ᵢ** are laterally-contoured, and more specifically are concave (that is, concave relative the inner side **19ᵢ**). It is appreciated that the inner side **19ᵢ** and the inner surface **20ᵢ** may each extend laterally along any lateral contour and be texturized as contemplated herein for the outer side **19ₒ** and the outer surface **20ₒ**. It is understood that a footprint formed along the inner side is generally longer relative a footprint formed along the outer side, for the same tire and surface shape. Therefore, it is believed that a concave surface, in lieu of a convex surface employed by the outer side, or at the very least a radius of curvature smaller than a radius of curvature employed by the outer surface, may be useful in shortening the footprint formed along the inner side to more closely achieve a footprint shape formed on a flat surface.

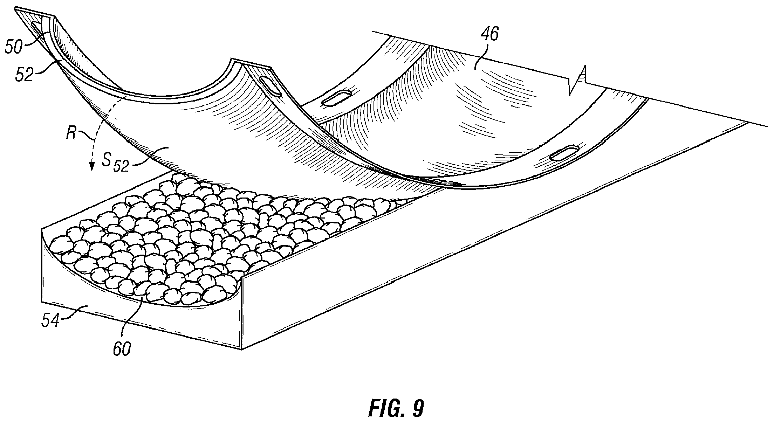

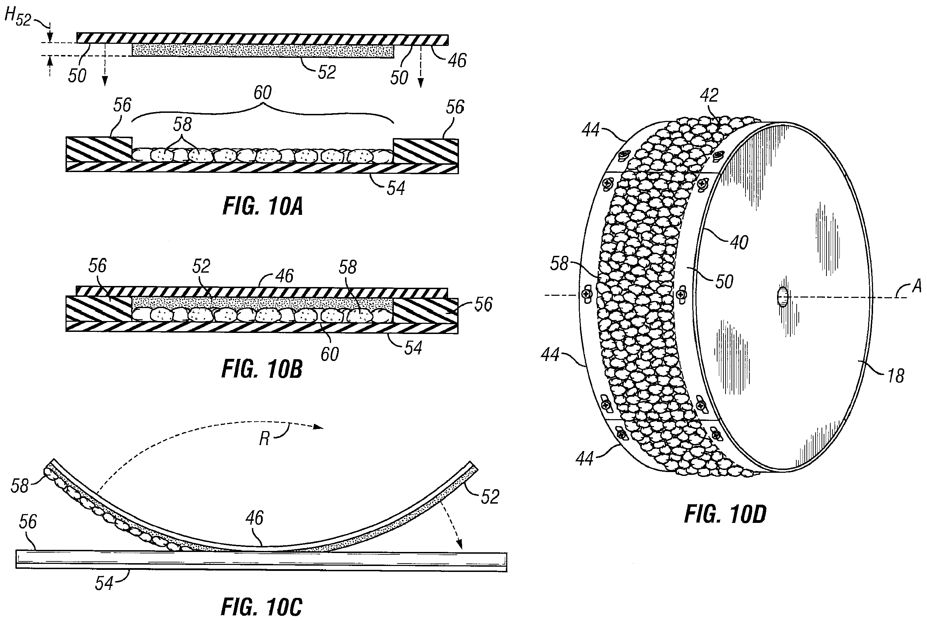

As mentioned above, the present invention includes methods of forming a laterally-contoured tire operating surface for a road wheel. The tire operating surface may be formed along an outer, annular side of the road wheel, or may be formed along components for forming a road wheel having a laterally-contoured operating surface. Exemplary embodiments for performing these methods are shown in FIGS. **9-10C****,** where a laterally-contoured tire operating surface **50** having texture is formed as generally shown in FIG. **9** on a base member to form a component comprising one of a plurality of sections **44** that is subsequently attached to a road wheel as exemplarily shown in FIG. **10D** having an annular tire operating surface. The process of forming the road wheel having a laterally-contoured tire operating surface is explained in association with a laterally-flat tire operating surface formed in FIGS. **10A-10D****,** such that one of ordinary skill would understand that the process shown in FIGS. **10A-10D** may be used to form a laterally-contoured tire operating surface by substituting the laterally-flat base member with a laterally-contoured base member to form any laterally-contoured operating surface described herein.

With reference now to the exemplary embodiments of FIGS. **9-10D****,** the more general methods of forming a laterally-contoured tire operating surface for a road wheel are discussed in association with the exemplary embodiment shown therein, which is not limiting on the broader method of forming the laterally-contoured tire operating surface. With reference to FIG. **9****,** methods of forming a laterally-contoured tire operating surface for a road wheel include the step of providing a longitudinally convex and laterally-contoured bonding surface **50** for receiving a textured tire operating surface **42** (shown in FIG. **10D**), the bonding surface being associated with a radially outer side **40** (shown in FIG. **10D**) of a rotatable road wheel **18** (shown in FIG. **10D**) and having a width extending widthwise along a contoured path and a convex length extending along an arcuate path. In the embodiment shown, the bonding surface **50** forms a portion of a similarly shaped base member **46.**

With reference to FIG. **10A****,** such methods further include the step of applying adhesive material **52** of a pre-determined thickness **H₅₂** along the bonding surface **50** to form a coated bonding surface comprising a longitudinally convex and laterally-contoured layer of adhesive material arranged along the bonding surface and arranging a single layer **60** of aggregate material **58** along a retention surface **54,** where each of the single layer of aggregate material and the retention surface are also laterally-contoured. Laterally-contoured variations of the coated bonding surface, single layer of aggregate material, and retention surface are shown by example in FIG. **9**.

With reference to FIG. **10B**, such methods also include the step of placing a width of the layer of adhesive material **52** of the coated bonding surface **50** into engagement with the single layer **60** of aggregate **58.** In the embodiment shown, aggregate guide members **56** are used to more precisely arranged the aggregates along the retention surface and to control the engagement of the aggregate layer **60** with the coated bonding surface **50.** With reference to FIGS. **9** and **10C****,** the methods also include the step of rotating the coated bonding surface **50** in a lengthwise direction (in direction **R**) relative the retention surface **54** until a length of the convex layer of adhesive material has engaged the single layer **60** of aggregate **58,** whereby the engaged aggregate remains affixed to the adhesive layer subsequent rotation to effectively transfer the engaged aggregate from the retention surface to the coated bonding surface to coat the adhesive layer with aggregate and thereby affixing the single layer of aggregate along the bonding surface to form a tire operating surface **42** (shown in FIG. **10D**) along the bonding surface.

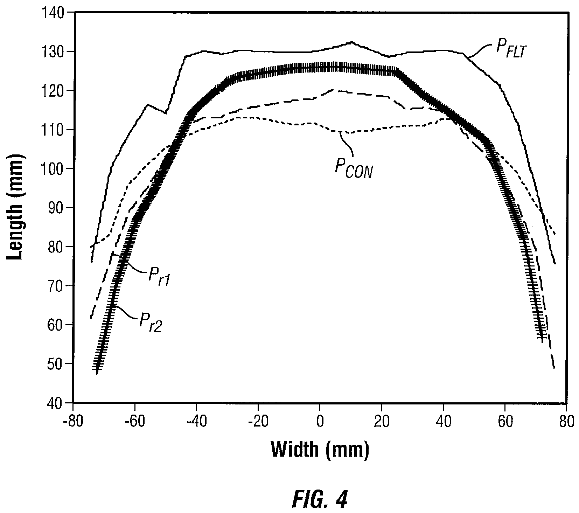

To evaluate the benefits of using a laterally-contoured tire operating surface, laterally-contoured outer tire operating surfaces of different radii were evaluated. In particular, tire footprints were taken along laterally-contoured outer tire operating surfaces and compared to footprints taken along a laterally flat outer tire operating surface (being a common road wheel) and a flat surface representing a common ground surface. With reference to FIG. **4****,** a radial tire sized for a 16 inch diameter rim and having a nominal width of 205 millimeters was tested on a flat surface and three different road wheels each having a circumferential diameter of 3 meters (m). The tire operating surface for each road wheel was annular and symmetrical in a widthwise direction of the surface relative a plane extending through a circumferential centerline of the tire operating surface, the plane extending perpendicular to the rotational axis of the road wheel and bisecting the tire operating surface along the maximum circumference of the tire operating surface extending in a circumferential direction of the road wheel. The first road wheel was laterally flat, meaning the tire operating surface had a width extending parallel to the rotational axis of the road wheel to form a right circular cylindrical surface having a 3 m diameter (where the tire operating surface was generally located 1.5 m from a rotational axis of the wheel across the width of the surface). The tire operating surface of the second road wheel had a laterally-contoured surface, where the width of the tire operating surface extended laterally along a 1.5 m radius of curvature, the radius extending from a location along the rotational axis of the road wheel where the radius of curvature defining the maximum circumference of the tire operating surface in a circumferential direction of the road wheel originates. The tire operating surface of the third road wheel had a laterally-contoured surface extending laterally along a 0.75 m radius of curvature in lieu of the 1.5 m radius of curvature characterizing the second road wheel. For each of the tests, a footprint was taken with the tire pressurized at 2.3 Bar (approx. equal to 33 pounds per square inch (psi) of pressure) and applied against the tire operating surface by a 457 dekanewton force (approx. equal to 1027 pound-force).

With continued reference to FIG. **4****,** the leading edge of the each footprint measured on each tire operating surface detailed above is shown as a line or profile. The x-axis coordinate represents the lateral position of the footprint's leading edge along a width of the footprint relative a lateral centerline of the tire (where x = 0). The lateral centerline extends longitudinally along the length of the footprint to divide the width of the footprint into first and second halves. The y-axis coordinate represents the length of the footprint and the distance of the leading edge from a longitudinal centerline. The longitudinal centerline extends laterally across a width of the footprint perpendicular to the lateral centerline of the tire to divide the length of the footprint into first and second halves.

In FIG. **4****,** the leading edge profile of the footprint measured on the flat surface is identified as **P_{FLT}**, while the leading edge profile measured for each footprint taken on the first road wheel (cylindrical surface), the second road wheel (lateral radius of curvature equal to 1.5 m), and the third road wheel (lateral radius of curvature equal to 0.75 m) is identified as **P_{CON}**, **Pᵣ₁**, and **Pᵣ₂**, respectively. Generally, the smaller the radius of curvature, the greater the curvature that is generated by the radius of curvature along the outer tire operating surface. Upon review of the leading edge profiles for each of the footprints measured, it is apparent that the length of each footprint formed along an annular outer tire operating surface (such as on a road wheel) is shorter than the footprint **P_{FLT}** formed on a flat surface. It is also apparent that the prior art road wheel having a cylindrical tire operating surface generates a footprint **P_{CON}** having the flattest leading edge and most unlike the footprint **P_{FLT}** formed along a flat surface. With regard to the road wheels having laterally-contoured tire operating surfaces, it is shown that the road wheel having a laterally-contoured surface defined by the smaller radius of curvature generates a footprint **Pᵣ₂** having a longer length more closely approaching the length of the footprint formed on a flat surface. This is an improvement over the footprint **P_{CON}** formed on the prior art road wheel having a cylindrical tire operating surface. It is also shown that the road wheel having a laterally-contoured surface defined by the larger radius of curvature generates a footprint **Pᵣ₁** having a flatter-shaped leading edge more closely shaped to the leading edge of the footprint formed on a flat surface. This is also an improvement over the footprint **P_{CON}** formed on the prior art road wheel having a cylindrical tire operating surface.

While this invention has been described with reference to particular embodiments thereof, it shall be understood that such description is by way of illustration and not by way of limitation. Accordingly, the scope and content of the invention are to be defined by the terms of the appended claims.

## Claims

1. A method of testing tire performance using a wheel (18), the method comprising the steps of:
providing a single wheel (18) configured to rotate, the wheel (18) having a tire operating surface (20) arranged along an outer annular side of the wheel (18) and configured to engage a tire (16) during operation,
engaging forcefully a tread of a tire (16) against the tire operating surface (20) of the wheel (18); and,
rotating the tire (16) and the wheel (18) while engaged according to the prior step for a duration to evaluate the tire (16);
**characterised in that** the tire operating surface (20) has a width extending laterally relative a circumferential direction of the wheel (18) and along a non-linear path and includes a convex portion (24) wherein the tire operating surface (20) is symmetrical relative a plane bisecting the width of the tire operating surface (20) and extending radially outward and normal to the rotational axis of the wheel (18) and where the non-linear path defines the convex portion (24) arranged between a pair of counter-curvature portions in an axial direction of the wheel (18), each counter-curvature portion (26) of the pair of counter-curvature portions (26) forming a concave side of the wheel (18) arranged adjacent to the convex portion (24) and having a radius of curvature forming a smooth transition between portions adjacent to the counter-curvature portion (26).

2. The method of claim 1, where the tire operating surface (20) tapers radially inward toward the rotational axis of the wheel (18) as the tire operating surface (20) extends laterally in a direction away from a centerline of the tire operating surface (20), the centerline extending circumferentially around the tire operating surface (20).

3. The method of claim 2, where the convex portion is defined by a constant radius of curvature and the radius of curvature has an origin located along the intersection of the plane and the rotational axis of the wheel (18),
along the plane and between the rotational axis of the wheel (18) and the tire operating surface (20), or
along the plane such that the rotational axis of the wheel (18) is located between the tire operating surface (20) and the origin.

4. The method of claim 1, where the non-linear path provides a non-linear portion arranged between a pair of cylindrical portions and comprising two or more different radii of curvatures.

5. A machine for testing tire performance, the machine comprising:
a single wheel (18) configured to rotate, the wheel (18) having a tire operating surface (20) arranged along an outer annular side of the wheel (18) and configured to engage a tire (16) during operation;
a drive source configured to rotate the wheel (18); and
a tire mount configured to rotatably maintain a tire (16) and forcefully maintain the tire (16) against the wheel (18)
**characterised in that** the tire operating surface (20) having a width extending laterally relative a circumferential direction of the wheel (18) and along a non-linear path and including a convex portion (24) wherein the tire operating surface (20) is symmetrical relative a plane bisecting the width of the tire operating surface (20) and extending radially outward and normal to the rotational axis of the wheel (18) and where the non-linear path defines the convex portion (24) arranged between a pair of counter-curvature portions in an axial direction of the wheel (18), each counter-curvature portion (26) of the pair of counter-curvature portions (26) forming a concave side of the wheel (18) arranged adjacent to the convex portion (24) and having a radius of curvature forming a smooth transition between portions adjacent to the counter-curvature portion (26).

6. The machine of claim 5, where the tire operating surface (20) tapers radially inward toward the rotational axis of the wheel (18) as the surface extends laterally in a direction away from a centerline of the tire operating surface (20), the centerline extending circumferentially around the tire operating surface (20).

7. The machine of claim 6, where at least a portion of the width of the tire operating surface (20) extends laterally along a convex portion (24) to form a laterally convex tire operating surface (20) and the width of the tire operation surface (20) is greater than a width of a tire (16).

8. The machine of claim 5, where at least a portion of the non-linear path is defined by a constant radius of curvature.

9. The machine of claim 7, where the convex portion (24) is defined by a constant radius of curvature and the radius of curvature has an origin located at the intersection of the plane and the rotational axis of the wheel (18).

10. The machine of claim 7, where the convex portion (24) is defined by a constant radius of curvature and the radius of curvature has an origin located along the plane and between the rotational axis of the wheel (18) and the tire operating surface (20).

11. The machine of claim 7, where the convex portion (24) is defined by a constant radius of curvature and the radius of curvature has an origin located along the plane such that the rotational axis of the wheel (18) is located between the tire operating surface (20) and the origin.

12. The machine of claim 5, where the non-linear path is defined by two or more different radii of curvatures.

13. The machine of claim 5, where the non-linear path provides a non-linear portion arranged between a pair of cylindrical portions (30).
